# EUROPÄISCHE PATENTSCHRIFT

(11) **EP 0 385 285 B1**
(45) Veröffentlichungstag und Bekanntmachung des Hinweises auf die Patenterteilung: **07.12.1994**
(21) Anmeldenummer: 90103494.2
(22) Anmeldetag: 23.02.1990
(51) Int. Cl.: B29C 47/90

(54) **Extrudieranlage für Kunststoffrohre**
Device for extruding plastic pipes
Dispositif pour extruder des tuyaux en matière plastique

(30) Priorität: 01.03.1989 DE 3906363
(43) Veröffentlichungstag der Anmeldung: 05.09.1990
(73) Patentinhaber: INOEX GmbH, D-32547 Bad Oeynhausen (DE)
(72) Erfinder: Neumann, Ulrich, D-4970 Bad Oeynhausen 1 (DE)
(74) Vertreter: Cohausz & Florack Patentanwälte

(56) Entgegenhaltungen:
- EP-A- 0 165 068
- EP-A- 0 180 571
- DE-A- 3 013 020
- FR-A- 2 207 016
- FR-A- 2 285 981
- FR-A- 2 375 979
- US-A- 3 270 806
- US-A- 4 152 380
- US-A- 4 740 146

## Beschreibung

Die Erfindung bezieht sich auf eine Extrudieranlage für Kunststoffrohre, bestehend aus einem Extruder, einer wassergekühlten Kalibrierhülse, einer Durchlaufkühlkammer für extrudierte Rohre und einer eine Durchlauföffnung aufweisenden Wanddickenmeßvorrichtung, die zwischen dem Extruder und der Durchlaufkühlkammer angeordnet ist.

Bei einer bekannten Extrudieranlage dieser Art ist die Durchlaufkühlkammer, die unter Vakuum steht, dem Extruder unmittelbar nachgeordnet. Die Kalibrierung des Rohres erfolgt mittels der wassergekühlten Kalibrierhülse, die mit einem wassergekühlten Kopf den Eingang der Kühlkammer bildet und sich mit ihrem hülsenförmigen, daran anschließenden Teil in die Kühlkammer hineinerstreckt. Der hülsenförmige Teil weist eine Vielzahl von gegeneinander in Umfangsrichtung und in axialer Richtung versetzten Schlitzen auf. Über diese Schlitze liegt zum einen das Vakuum der Durchlaufkühlkammer an der Außenseite des extrudierten Rohres an, wodurch es gegen die Wandinnenseite der Kalibrierhülse gesaugt wird, und zum anderen wird über diese Schlitze von Sprühdüsen Wasser der Oberfläche des extrudierten Rohres zugeführt.

Eine Kalibrierhülse, die das nasse Kalibrieren von Rohren ermöglicht, ist aus der deutschen Offenlegungsschrift DE 30 13 020 A1 bekannt. Diese Hülse weist auf der Innenseite ihrer Durchgangsöffnung regelmäßig zueinander beabstandete umlaufende Nuten auf, die mit einem Kühlmittel beaufschlagt werden können. Jeweils zwischen den Nuten sind darüber hinaus schlitzförmige Unterdrucköffnungen angeordnet, über die der Durchmesser des durchlaufenden Rohres kalibrierbar ist.

In der Praxis hat sich die nasse Kalibrierung gegenüber einer trockenen Kalibrierung durchgesetzt, weil das Wasser wie ein Schmiermittel zwischen dem extrudierten Rohr und der Wandinnenseite der Hülse wirkt. Die Wanddickenmessung des kalibrierten und durch die Kühlung in der Durchlaufkühlkammer formstabil gemachten Rohres findet in der der Kühlkammer nachgeordneten Wanddickenmeßvorrichtung statt, die mit einer Zentriervorrichtung und einem das Rohr umlaufenden nach dem Ultraschallmeßprinzip arbeitenden Meßkopf ausgerüstet ist (MM Maschinenmarkt, Würzburg, Nr. 51 - 24.Juni 1980, Seite 1002 ff. "Energieeinsparungen sind bei der Kunststoffextrusion noch immer möglich" von Ulrich Neumann; Prospekte Firma Inoex Aurex 88 R, 49.0.04/88 D und "Scanner SC 88, 52.0 .04/88 D; DE 38 06 301 C1).

Nachteilig bei diesem Stand der Technik ist, daß die Durchlaufkühlkammer für die Unterbringung der Kalibrierhülse großvolumig ausgelegt sein muß. Ein weiterer Nachteil besteht darin, daß die Wanddickenmessung erst an dem durch die Kühlung der Durchlaufkühlkammer formstabil gemachten Rohr möglich ist. Bei über den Umfang unterschiedlichen Temperaturen infolge ungleichmäßiger Kühlung und/oder Dickenunterschieden kommt es bei der nach dem Ultraschallmeßprinzip arbeitenden Wanddickenmeßvorrichtung zu Meßfehlern. Ein weiterer Nachteil dieser späten Messung besteht darin, daß den Toleranzbereich überschreitende Wanddickenabweichungen nicht schnell genug festgestellt und am Extruder eine Korrektur vorgenommen werden kann.

Ferner ist eine Kalibrieranlage bekannt, bei der eine am Eingang der Durchlaufkühlkammer angeordnet Kalibrierhülse nach außen verschlossen ist und die Kanäle für Kühlwasser und Saugöffnungen aufweist, so daß das zu kalibrierende Rohr gegen die Innenseite der gekühlten Wand gesaugt wird (DT 22 39 747 A1). Eine ähnliche Kalibriereinrichtung kann auch der Durchlaufkühlkammer vorgeordnet sein Schließlich ist aus der europäischen Patentanmeldung EP 0 180 571 A3 eine Extrudieranlage zum Extrudieren von Rohren bekannt, bei der auf die hinter dem Extruder angeordnete Kalibriereinrichtung eine Wanddickenmessvorrichtung folgt. Diese Wanddickenmessvorrichtung ist dabei in einem der eigentlichen Durchlaufkühlung vorgeordneten, gleichfalls wassergekühlten Kühlmantel angeordnet. Der Nachteil dieser bekannte Anlage besteht zum einen darin, daß auch bei dieser Vorrichtung die Wanddickenmessung zwar vor der eigentlichen Durchlaufkühlung aber dennoch erst in einem der Extrudierdüse relativ weit nachgeordneten Bereich erfolgt. Darüber hinaus benötigt die bekannte Vorrichtung aufgrund der Verwendung eines Kühlmantels eine große Aufstellfläche.

Der Erfindung liegt die Aufgabe zugrunde, eine Extrudieranlage zu schaffen, bei der bei geringem vorrichtungstechnischen Aufwand die Kalibrierung der extrudierten Kunststoffrohre im Vergleich zum Stand der Technik verbessert ist.

Diese Aufgabe wird erfindungsgemäß bei einer Extrudieranlage der eingangs genannten Art dadurch gelöst, daß die Kalibrierhülse in der Durchlauföffnung der Wanddickenmeßvorrichtung angeordnet ist und sich in diese unter Freilassung eines Bereichs für die Meßeinrichtungen der Wanddickenmeßvorrichtung hinein erstreckt und daß die Kalibrierhülse an ihrer inneren Wandseite mit über den Umfang und die Länge verteilten Einlässen für Wasser und Saugöffnungen versehen ist.

Bei der erfindungsgemäßen Extrudieranlage bleiben die Vorteile der nassen Vakuumkalibrierung erhalten, ohne daß dafür eine voluminöse Durchlaufkühlkammer erforderlich ist. Darüber hinaus erfolgt die Wanddickenmessung unmittelbar nach der Kalibrierung und nahe am Extruder, so daß sehr früh bei außerhalb des Toleranzbereichs liegenden Meßwerten korrigierend an der Extruderdüse eingegriffen werden kann. Meßfehler infolge unterschiedlicher Temperaturen über dem Umfang sind praktisch ausgeschlossen, weil anders als bei der Kühlung in der Durchlaufkammer durch Aufsprühen von Wasser mittels der Sprühdüsen bei der Kühlung in der Kalibrierhülse eine absolut gleichmäßige Kühlung über den Umfang sichergestellt ist. Weiterhin ist die Abkühlzeit so kurz, daß eventuell kühlungsbedingte Temperaturunterschiede die Meßwerte nicht verfälschen.

Nach einer Ausgestaltung der Erfindung kann die Verteilung von Einlässen für Wasser und Saugöffnungen dadurch verwirklicht werden, daß die Einlässe für Wasser und die Saugöffnungen als schraubenförmig verlaufende Kanäle ausgebildet sind. Bei dieser Ausgestaltung der Erfindung können über die Länge der Hülse mehrere Anschlüsse für die Wasserzuführung und die Wasserabführung sowie für die Saugöffnungen vorgesehen sein, um die Kühlwirkung zu steuern und es nicht zu einem Unterdruckabfall kommen zu lassen.

Nach einer weiteren Ausgestaltung ist die Kalibrierhülse als Zentriervorrichtung für ein um das zu messende Rohr umlaufenden Meßkopf der Wanddickenmeßvorrichtung ausgebildet. Zusätzliche Zentriermittel, wie z.B. Zentrierrollen erübrigen sich also.

Im folgenden wird die Erfindung anhand einer ein Ausführungsbeispiel darstellenden Zeichnung näher erläutert. Im einzelnen zeigen:
- Fig. 1: eine Extrudieranlage mit Extruder, Durchlaufkühlkammer und dazwischen angeordneter Wanddickenmeßvorrichtung mit Kalibrierhülse in schematischer Darstellung in Seitenansicht und

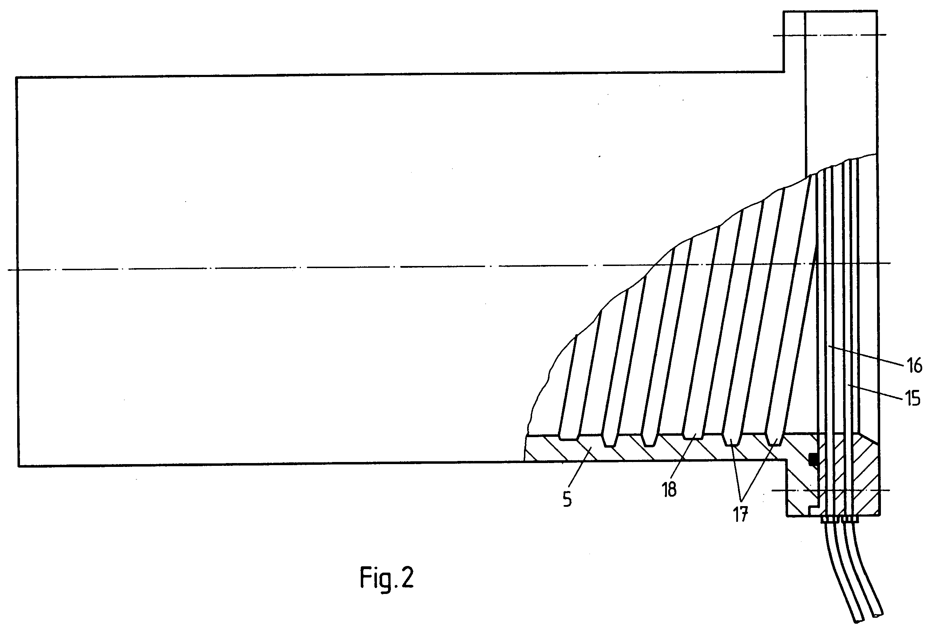

- Fig.2: eine Kalibrierhülse der Extrudieranlage der Fig. 1 in Seitenansicht und teilweise im Schnitt in vergrößerter Darstellung.

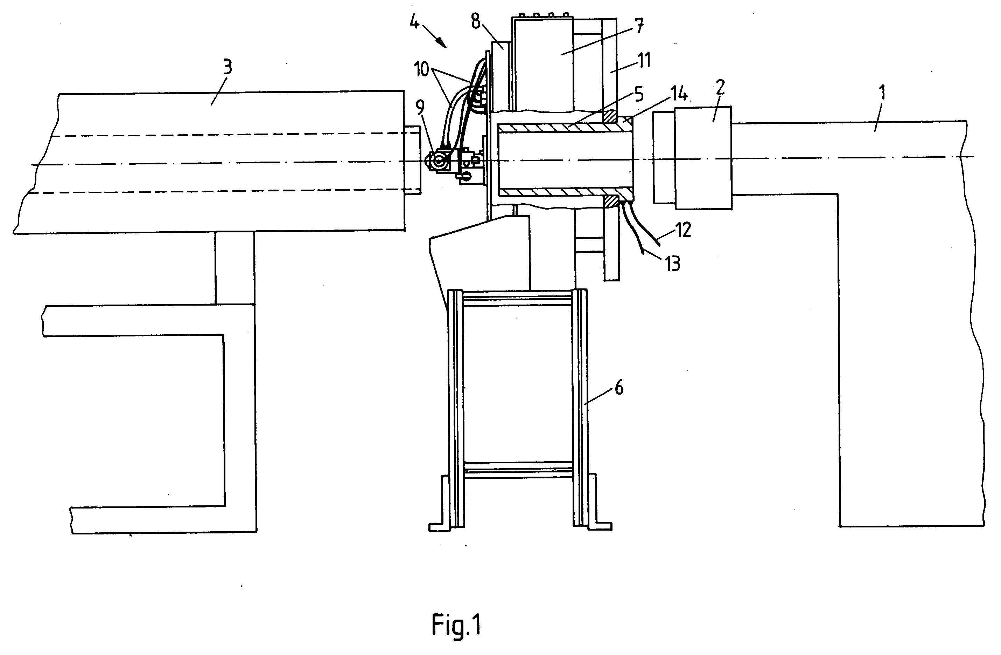

Nach Fig. 1 ist zwischen einem Extruder 1 mit einer Extruderdüse 2 für Rohre und einer unter Vakuum stehenden Durchlaufkühlkammer 3, die mit nicht dargestellten, auf das durchlaufende Rohr gerichteten Sprühdüsen für Wasser ausgerüstet ist, eine Wanddickenmeßvorrichtung 4 mit einer in deren Durchlauföffnung starr befestigten Kalibrierhülse 5 angeordnet. Die Wanddickenmeßvorrichtung ist an sich bekannt (DE 38 06 301 C1). Auf einem Unterbau 6 ist ein Gestell 7 angeordnet, das an seiner der Durchlaufkühlkammer 3 zugewandten Seite einen hohlzylindrischen Kasten 8 trägt, der einem reversierend umlaufenden Meßkopf 9 und dessen Antrieb sowie zu dem Meßkopf 9 führenden Meß- und Versorgungsleitungen 10 als Führung dient. Dieser nach dem Ultraschallprinzip arbeitende Meßkopf 9 dient zur Erfassung der Wanddicke des extrudierten Rohres.

Das Gestell 7 trägt auf der der Extruderdüse 2 zugewandten Seite einen Montagerahmen 11, an dem die Kalibrierhülse 5 befestigt ist. Zu dieser Kalibrierhülse 5 führen in der Zeichnung angedeutete Versorgungsleitungen 12, 13 für Wasser und Vakuum.

Diese beiden Versorgungsleitungen 12, 13 sind am Flansch 14 der Kalibrierhülse 5 angeschlossen und münden in Ringkanälen 15, 16 an der Innenseite des Flansches 14. Von diesen als offene Nuten ausgebildeten Ringkanälen 15, 16 gehen schraubenförmig verlaufende Kanäle aus. So geht von dem Wasser führenden Ringkanal 15 ein doppelgängiger Kanal 17 und von dem am Vakuum liegenden Ringkanal 16 ein zwischen dem doppelgängigen Kanal 17 liegender Kanal 18 aus. Durch das an den Kanälen 16, 18 anliegende Vakuum wird das in der Kalibrierhülse 5 befindliche, extrudierte Rohr gegen die Innenseite der Kalibrierungshülse 5 gezogen, wodurch es auf das gewünschte Maß kalibriert wird. Durch das in den Kanälen 15, 17 fließende Wasser wird das Rohr gekühlt und gegenüber der Innenseite der Kalibrierhülse 5 geschmiert. Das die Kalibrierhülse 5 verlassende Rohr hat dann eine über dem Umfang gleichmäßige Temperatur und eine ausreichende Formstabilität, um von dem Meßkopf 9 bezüglich seiner Wanddicke unter Ausschluß von temperaturbedingten Meßfehlern vermessen werden zu können. Sollten Unterschiede in der Wanddicke festgestellt werden, kann darauf schnell durch Einstellung an der Extruderdüse 2 reagiert werden. Zu langen in der Wanddicke fehlerhaften Rohren kann es also nicht mehr kommen.

## Patentansprüche

1. Extrudieranlage für Kunststoffrohre, bestehend aus einem Extruder (1), einer wassergekühlten Kalibrierhülse (5), einer Durchlaufkühlkammer (3) für die extrudierten Rohre und einer eine Durchlauföffnung aufweisenden Wanddickenmeßvorrichtung (4), die zwischen dem Extruder (1) und der Durchlaufkühlkammer angeordnet ist, **dadurch gekennzeichnet, daß** die Kalibrierhülse (5) in der Durchlauföffnung der Wanddickenmeßvorrichtung (4) angeordnet ist und sich in diese unter Freilassung eines Bereichs für die Meßeinrichtungen der Wanddickenmessvorrichtung (4) hinein erstreckt und daß die Kalibrierhülse (5) an ihrer inneren Wandseite mit über den Umfang und die Länge verteilten Einlässen (17) für Wasser und Saugöffnungen (18) versehen ist.

2. Extrudieranlage nach Anspruch 1, **dadurch gekennzeichnet,** daß die Einlässe (17) für Wasser und die Saugöffnungen (18) als schraubenförmig verlaufende Kanäle ausgebildet sind.

3. Extrudieranlage nach Anspruch 1 oder 2, **dadurch gekennzeichnet,** daß die Kalibrierhülse (5) als Zentriervorrichtung für einen das zu messende Rohr umlaufenden Meßkopf (9) der Wanddickenmeßvorrichtung (4) ausgebildet ist.

## Claims

1. An extrusion system for plastics pipes, consisting of an extruder (1), a water-cooled calibrating sleeve (5), a continuous cooling chamber (3) for the extruded pipes and a wall thickness measuring device (4) having a passage and being arranged between the extruder (1) and the continuous cooling chamber, wherein the calibrating sleeve (5) is arranged in the passage of the wall thickness measuring device (4) and extends into it by leaving a space for the measuring means of the wall thickness measuring device (4) and that the calibrating sleeve (5) is provided on its inner wall side with inlets (17) for water and suction orifices (18), distributed over the circumference and the length.

2. An extrusion system as claimed in claim 1, wherein the inlets (17) for water and the suction orifices (18) are designed as helically running channels.

3. An extrusion system as claimed in claim 1 or 2, wherein the calibrating sleeve (5) is designed as a centering device for a measuring head (9) of the wall thickness measuring device (4), which head runs around the pipe to be measured.

## Revendications

1. Installation d'extrusion pour tubes en matière plastique, composée d'une extrudeuse (1), d'une filière de calibrage (5) refroidie par eau, d'une chambre de refroidissement à passage traversant (3) pour les tubes extrudés, et d'un dispositif (4) de mesure de l'épaisseur de paroi présentant une lumière de passage, qui est interposé entre l'extrudeuse (1) et la chambre de refroidissement à passage traversant, caractérisée en ce que la filière de calibrage (5) est disposée dans la lumière de passage du dispositif (4) de mesure de l'épaisseur de paroi et s'étend dans cette lumière en laissant libre une région pour les organes de mesure du dispositif (4) de mesure de l'épaisseur de paroi, et en ce que la filière de calibrage (5) est munie, sur la face interne de sa paroi, d'entrées (17) pour l'eau et d'ouvertures d'aspiration (18) réparties sur la circonférence et sur la longueur.

2. Installation d'extrusion selon la revendication 1, caractérisé en ce que les entrées (17) pour l'eau et les ouvertures d'aspiration (18) sont constituées par des canaux hélicoïdaux.

3. Installation d'extrusion selon la revendication 1 ou 2, caractérisée en ce que la filière de calibrage (5) forme un dispositif de centrage pour une tête de mesure (9) du dispositif (4) de mesure de l'épaisseur de paroi qui tourne autour du tube à mesurer.
